# EUROPEAN PATENT SPECIFICATION

(11) **EP 3 896 305 B1**
(45) Date of publication and mention of the grant of the patent: **21.08.2024**
(21) Application number: 21168906.2
(22) Date of filing: 16.04.2021
(51) Int. Cl.: F16D 3/78, F16D 3/79, B62D 1/20, B62D 1/16, B62D 5/04

(54) **STEERING MECHANISM OF ALL-TERRAIN VEHICLE AND ALL-TERRAIN VEHICLE**
LENKMECHANISMUS FÜR EIN GELÄNDEFAHRZEUG UND GELÄNDEFAHRZEUG
MÉCANISME DE DIRECTION DE VÉHICULE TOUT TERRAIN ET VÉHICULE TOUT TERRAIN

(30) Priority: 16.04.2020 CN 202020564526 U
(43) Date of publication of application: 20.10.2021
(73) Proprietor: Segway Technology Co., Ltd., Jiangsu 213000 (CN)
(72) Inventor: LI, Xiang, Changzhou, 213000 (CN)
(74) Representative: Studio Torta S.p.A.

(56) References cited:
- EP-A1- 0 761 524
- WO-A1-2018/087096
- CN-A- 110 239 611
- CN-U- 202 743 321
- DE-A1- 102012 214 073
- FR-A1- 2 430 539
- FR-A1- 2 904 070
- GB-A- 1 341 792
- GB-A- 2 041 848
- JP-U- S5 161 622
- JP-U- S54 161 444
- JP-U- S62 194 216

## Description

### FIELD

The present disclosure relates to the field of vehicle manufacturing, and more particularly, to a steering mechanism of an all-terrain vehicle and an all-terrain vehicle.

### BACKGROUND

In the related art, a steering shaft of an all-terrain vehicle is generally directly and rigidly coupled to a power steering system, but due to certain errors in manufacturing and assembling processes, there is a situation where the steering shaft is not coaxial with the power steering system, such that a steering wheel of the all-terrain vehicle will become heavy or difficult to turn in a long-term frequent steering process, which in turn causes parts for fixing the steering shaft to be easily worn, and ultimately affects driving safety.

GB2041848A relates to a tractor with a resiliently suspended cab enclosing an operator's station, a steering wheel assembly carried by the cab and a hydrostatic steering unit carried by a portion of the tractor (for example the engine block) which does not form part of the cab or in any way define the operator's enclosure. The steering wheel assembly is connected with the steering unit via a linkage which includes a vibration isolating coupling which is also capable of accommodating any relative movement between the steering wheel assembly and steering unit and completes the isolation of the steering unit from the cab.

CN202743321U discloses a steering shaft device for an all terrain vehicle, which comprises a steering wheel, a power-assisted steering gear and a cross shaft component, wherein the steering wheel is connected with the power-assisted steering gear through the cross shaft component; and one end of the cross shaft component is connected with the steering wheel, and the other end of the cross shaft component is connected with the power-assisted steering gear.

FR2430539A1 relates to a flexible coupling for joining two shafts is made from two pieces of metal strip. Each strip is bent to the form of a shallow "U" with out-turned ends. The two pieces are aligned at right angles to each other and bonded to rubber inside a cruciform shroud. Each piece is bolted to an oval flange formed on the ends of the shafts.

DE102012214073A1 relates to a steering column of a vehicle, having a first and second shaft part which are connected together via a universal-joint-like joint arrangement, which has a first and a second rubber-elastic flexible joint disc, in a manner arranged coaxially with one another in succession as seen in the axial direction and without elastic deformation of the flexible joint discs within conventional tolerances, wherein an intermediate piece which is independent of the two shaft parts in terms of its movability is provided between the two flexible joint discs and is connected to the shaft parts in such a universal-joint-like manner via the flexible joint discs that, in the installed state of the steering column, the rotation axes of the two shaft parts, when viewed in an appropriate side view, enclose a deflection angle (beta) of the steering column on account of elastic deformation of the two flexible joint discs.

JPS5161622U relates to a rubber coupling assembly for vehicles.

JPS54161444U discloses a cushioning shaft joint of a steering shaft.

JPS62194216U discloses an elastic shaft joint.

GB1341792A discloses a disengageable mechanism for the connection of two shafts used for example in a collapsible steering column for motor vehicles, comprises two flanges rigidly connected to the shafts formed of hubs and pairs of arms, the arms of each pair being disposed at an angle between 90 and 180 degrees to one another and being bolted to a ring-shaped elastic connected member. The bolts (not shown) extend through holes in the connecting member and through holes in the flanges. As shown, the connecting member is composed of rubber plates interposed between textile plates.

EP0761524A1 discloses a safety steering column that has an elastic universal joint coupling in the steering string between the steering parts. This coupling is so designed that in a crash, the steering parts are separated. This is achieved by self-releasing connecting bolts in an elastic disc of the coupling. The coupling connects one part of the steering shaft to a pinion of the steering transmission. The coupling has a connecting part with detachable connection in the elastic disc of the coupling, which is fixed to a second connecting part.

FR2904070A1 discloses a joint that has a hollow coupling unit comprising a connection jaw that is connected to a cardan jaw by using a spider. A connection jaw is connected to a cardan jaw by using a spider. A filtering unit connects the connection jaws by being placed between the jaws, where the unit filters vibrations between the jaws. The unit has an opening that is centered along a longitudinal axis such that a central ball pivot is positioned inside the opening. The unit is provided in the form of a disk.

### SUMMARY

In view of the above, a main objective of embodiments of the present disclosure is to provide a steering mechanism of an all-terrain vehicle and an all-terrain vehicle, to solve the technical problem of the all-terrain vehicle in the related art that parts for fixing the steering shaft are prone to abrasion in the long-term frequent steering process.

To achieve the above objective, technical solutions of the embodiments of the present disclosure are implemented as follows.

An embodiment of the present disclosure provides a steering mechanism of an all-terrain vehicle, as defined in claim 1.

Further, the first shaft sleeve includes a first body and a first connecting plate arranged at an end of the first body, and the second shaft sleeve includes a second body and a second connecting plate arranged at an end of the second body; and the first connecting plate is fastened to the elastic membrane assembly, and the second connecting plate is fastened to the elastic membrane assembly.

Further, the elastic membrane assembly includes two elastic membranes, the two elastic membranes are configured as a first elastic membrane and a second elastic membrane, and the connecting portion further includes a rigid spacer; the rigid spacer is interposed between and fastened to the first elastic membrane and the second elastic membrane; the first shaft sleeve is arranged on a side of the first elastic membrane away from the rigid spacer, and fastened to the first elastic membrane; and the second shaft sleeve is arranged on a side of the second elastic membrane away from the rigid spacer, and fastened to the second elastic membrane.

Further, the first shaft sleeve is welded to the steering shaft.

Further, the steering mechanism further includes a steering rocker arm and two steering links; and the steering rocker arm has a first end rotatably coupled to the power steering system and a second end rotatably coupled to the two steering links.

Further, the power steering system is an electric power steering system.

Optionally, the first shaft sleeve comprises a first body, and the second shaft sleeve comprises a second body; and an end surface of the first body and an end surface of the second body are fastened to the elastic membrane assembly.

According to a not claimed example, a first through hole is provided in a side wall of the second shaft sleeve, a second through hole is provided in a side wall of the connecting shaft, and the first through hole is in communication with the second through hole to allow passage of a fastener.

Optionally, the elastic membrane assembly comprises a plurality of stacked elastic membranes.

Optionally, the steering mechanism includes a steering handle assembly coupled to the steering shaft.

Optionally, the elastic membrane is a metal sheet.

Another embodiment of the present disclosure further provides an all-terrain vehicle of a straddle type. The all-terrain vehicle includes a frame and the above steering mechanism, and the steering mechanism is arranged to the frame.

The embodiments of the present disclosure provide the steering mechanism and the all-terrain vehicle. By arranging the connecting portion having the first shaft sleeve, the second shaft sleeve and the elastic membrane assembly between the steering shaft and the power steering system, the situation where the steering wheel of the all-terrain vehicle becomes heavy or difficult to turn in the long-term frequent steering process can be avoided, thereby preventing the abrasion of the parts for fixing the steering shaft, greatly improving controllability of an operator during driving, and guaranteeing driving safety.

### BRIEF DESCRIPTION OF THE DRAWINGS

Fig. 1 is a schematic structural diagram of a steering mechanism according to an embodiment of the present disclosure;
Fig. 2 is a schematic structural diagram of the steering mechanism shown in Fig. 1, from another angle of view;
Fig. 3 is a partial enlarged view at A in Fig. 2;
Fig. 4 is a schematic structural diagram of a connecting portion shown in Fig. 1;
Fig. 5 is a schematic structural diagram of the connecting portion shown in Fig. 4, from another angle of view;
Fig. 6 is a schematic structural diagram of the connecting portion shown in Fig. 4, from yet another angle of view; and
Fig. 7 is a schematic structural diagram of another connecting portion according to an embodiment of the present disclosure.

### Reference numerals:

steering shaft 10; power steering system 20; connecting shaft 21; external spline 21a; connecting portion 30; first shaft sleeve 31; first body 311; first connecting plate 312; second shaft sleeve 32; shaft hole 32a; internal spline 32b; second body 321; second connecting plate 322; mounting portion 324; first mounting block 3241; second mounting block 3242; elastic membrane assembly 33; elastic membrane 331; first elastic membrane 331a; second elastic membrane 331b; rigid spacer 34; steering handle assembly 40; rocker arm 50; steering link 60.

### DETAILED DESCRIPTION

It should be noted that embodiments and technical features in the embodiments of the present disclosure may be combined with each other without conflict, and detailed description shall be understood as explanation on principles of the present disclosure rather than construed as limitation of the present disclosure.

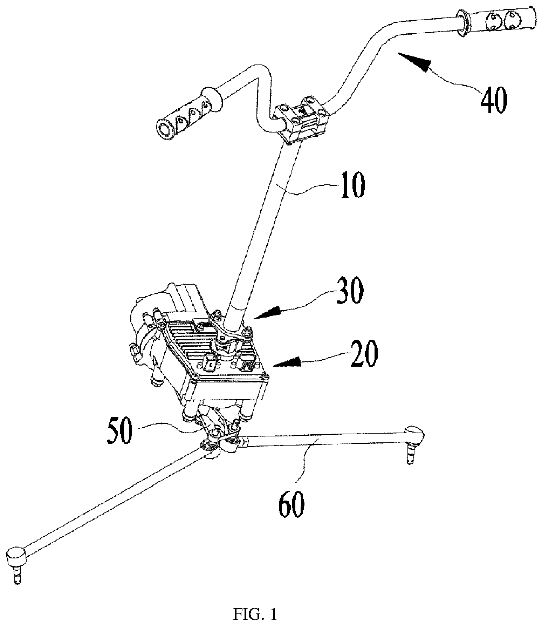

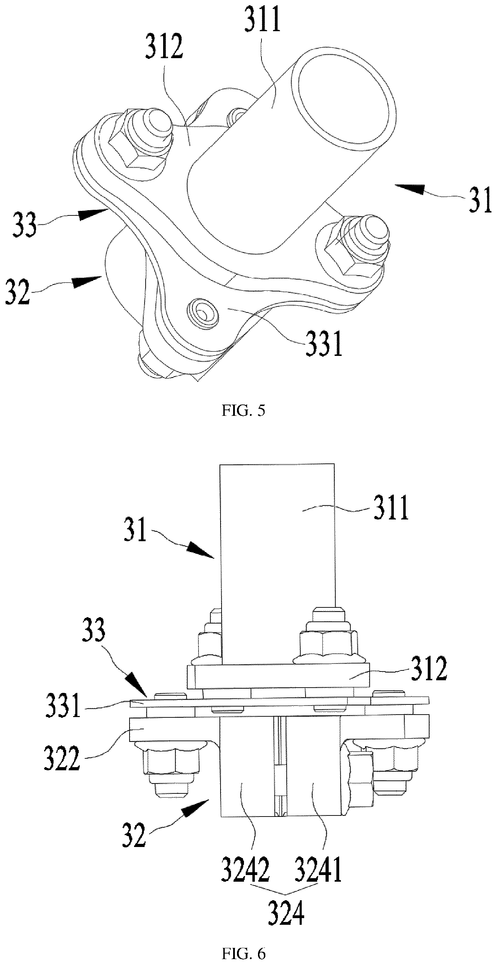

An embodiment of the present disclosure provides a steering mechanism of an all-terrain vehicle. Referring to Figs. 1 to 6, the steering mechanism includes a steering shaft 10, a power steering system 20 and a connecting portion 30. The connecting portion 30 includes a first shaft sleeve 31, a second shaft sleeve 32 and an elastic membrane assembly 33, and the elastic membrane assembly 33 includes at least one elastic membrane 331. The first shaft sleeve 31 and the second shaft sleeve 32 are arranged on two sides of the elastic membrane assembly 33 and are both fastened to the elastic membrane assembly 33. An end of the first shaft sleeve 31 away from the elastic membrane assembly 33 is coupled to the steering shaft 10, and an end of the second shaft sleeve 32 away from the elastic membrane assembly 33 is coupled to the power steering system 20.

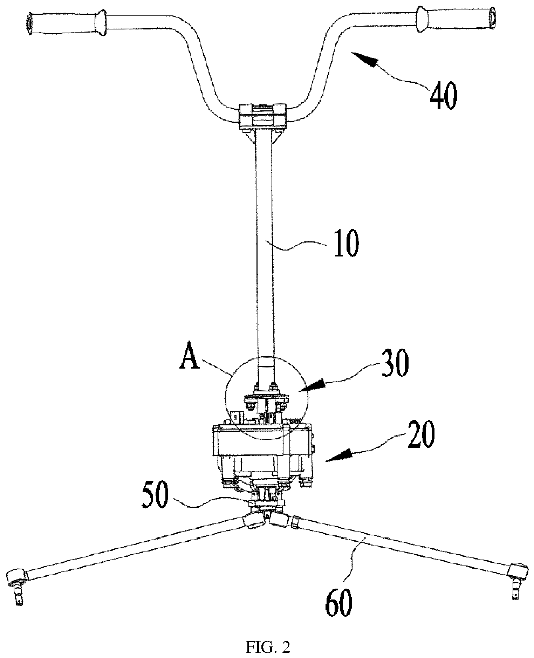

Specifically, referring to Figs. 1 and 2, the steering mechanism according to the present embodiment further includes a steering handle assembly 40, a steering rocker arm 50, and two steering links 60. The steering handle assembly 40 is coupled to the steering shaft 10. The steering rocker arm 50 has a first end rotatably coupled to the power steering system 20 and a second end rotatably coupled to the two steering links 60. The steering links 60 are coupled to wheels of the all-terrain vehicle to steer the wheels during driving.

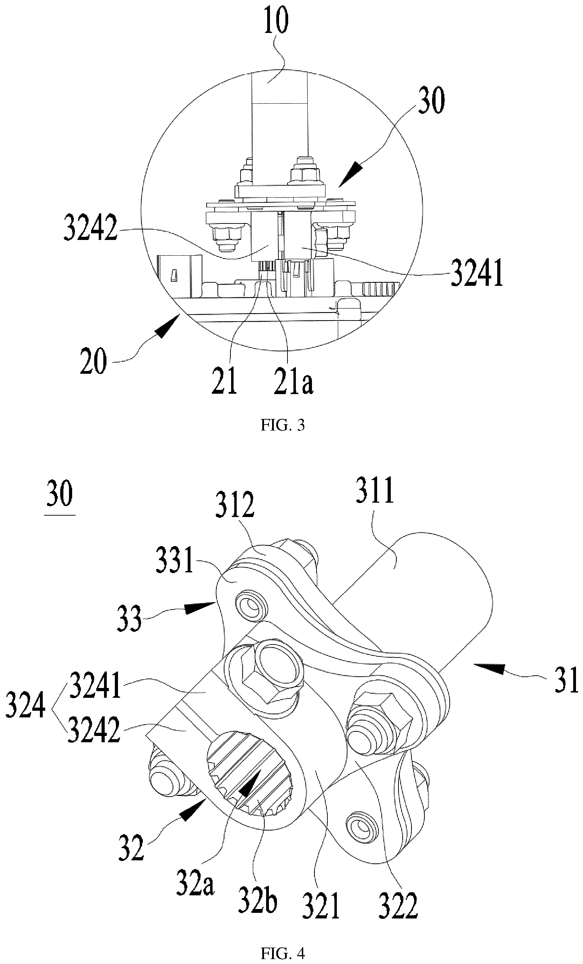

In order to make the first shaft sleeve 31 and the second shaft sleeve 32 fastened to the elastic membrane 331 conveniently, referring to Figs. 4 to 6, the first shaft sleeve 31 in the present embodiment includes a first body 311 and a first connecting plate 312 arranged at one end of the first body 311; the second shaft sleeve 32 includes a second body 321 and a second connecting plate 322 arranged at one end of the second body 321. The first connecting plate 312 is fastened to the elastic membrane assembly 33, and the second connecting plate 322 is fastened to the elastic membrane assembly 33. It can be appreciated that the first connecting plate 312 and the second connecting plate 322 may be omitted in other embodiments, and for example, end surfaces of the first body 311 and the second body 321 may be fastened to the elastic membrane assembly 33.

The power steering system 20 according to the present embodiment is an electric power steering (EPS) system. The EPS system is a power steering system that relies directly on an electric motor to provide auxiliary torque directly. Compared with a hydraulic power steering (HPS) system, the EPS system can eliminate the need for power steering oil pumps, hoses, hydraulic oil, conveyor belts and engine-mounted pulleys that are necessary for the HPS system, thereby saving energy and protecting the environment. In addition, the EPS system also has the advantages of simple adjustment, flexible assembly and capability of providing steering power under various conditions. It can be understood that the power steering system 20 may also be an HPS system in other embodiments.

The elastic membrane 331 in the present embodiment has a certain elastic deformation capability. Axial, radial and angular offsets between the steering shaft 10 and the power steering system 20 caused by manufacturing and assembling errors can be compensated by the elastic deformation of the elastic membrane 331, thus avoiding a situation where a steering wheel of the all-terrain vehicle becomes heavy or difficult to turn in a long-term frequent steering process, preventing abrasion of parts for fixing the steering shaft 10, greatly improving controllability of an operator during driving, and guaranteeing driving safety. The elastic membrane 331 in the present embodiment is configured as a metal sheet, and more specifically, the metal sheet may be a stainless steel sheet. In other embodiments, the elastic membrane may be made of other materials as long as it has a certain elastic deformation capability. In the present embodiment, only one elastic membrane 331 is provided in the elastic membrane assembly 33 and fastened to both the first shaft sleeve 31 and the second shaft sleeve 32. In other embodiments, the elastic membrane assembly 33 may include a plurality of stacked elastic membranes 331.

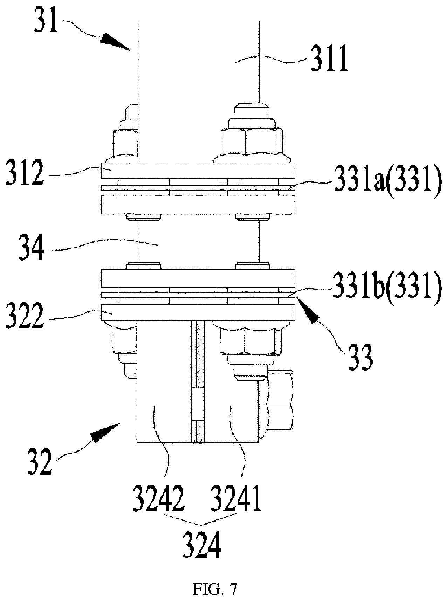

Further, referring to Fig. 7, in another embodiment, the elastic membrane assembly 33 may include two elastic membranes 331. For convenience of description, in the present embodiment, the two elastic membranes 331 are referred to as a first elastic membrane 331a and a second elastic membrane 331b, and the connecting portion 30 further includes a rigid spacer 34. The rigid spacer 34 is interposed between and fastened to the first elastic membrane 331a and the second elastic membrane 331b. The first shaft sleeve 31 is arranged on a side of the first elastic membrane 331a away from the rigid spacer 34, and fastened to the first elastic membrane 331a. The second shaft sleeve 32 is arranged on a side of the second elastic membrane 331b away from the rigid spacer 34, and fastened to the second elastic membrane 331b. By providing the rigid spacer 34 between the first elastic membrane 331a and the second elastic membrane 331b, the first shaft sleeve 31 and the second shaft sleeve 32 can be offset in different directions, thus compensating for eccentricity between the steering shaft 10 and the power steering system 20.

Referring to Figs. 1 to 4, the power steering system 20 in the present embodiment is splined to the second shaft sleeve 32.

Specifically, the power steering system 20 in the present embodiment includes a connecting shaft 21 having an external spline 21a, and the second shaft sleeve 32 is provided with a shaft hole 32a having an internal spline 32b. The second shaft sleeve 32 is fitted over the connecting shaft 21, and the external spline 21a is fitted with the internal spline 32b. The splines have a high load-bearing capacity and good centering property, thus improving the reliability of connection between the power steering system 20 and the second shaft sleeve 32. In other embodiments, the connecting shaft 21 may be provided with an internal spline 32b, the second shaft sleeve 32 may be provided with an external spline 21a, and the connecting shaft 21 may be fitted over the second shaft sleeve 32.

Further, referring to Figs. 3, 4 and 6, the second shaft sleeve 32 in the present embodiment further includes a mounting portion 324 arranged on an outer wall of the second body 321. The mounting portion 324 includes a first mounting block 3241 and a second mounting block 3242 arranged oppositely, and a gap in communication with the shaft hole 32a is formed between the first mounting block 3241 and the second mounting block 3242. The second body 321 is fitted over the connecting shaft 21, and the first mounting block 3241 is fastened to the second mounting block 3242. By providing the mounting portion 324, the second shaft sleeve 32 can be mounted and dismounted conveniently. In other embodiments, the mounting portion 324 may be omitted. For example, a first through hole may be provided in a side wall of the second shaft sleeve 32, a second through hole may be provided in a side wall of the connecting shaft 21, and after the second shaft sleeve 32 is splined to the connecting shaft 21, the first through hole is in communication with the second through hole, and a fastener passes through the first through hole and the second through hole to fasten the second shaft sleeve 32 to the connecting shaft 21.

Additionally, in the present embodiment, the first shaft sleeve 31 is welded to the steering shaft 10, thus improving reliability of the connection between the first shaft sleeve 31 and the steering shaft 10. In other embodiments, the first shaft sleeve 31 may also be fastened to the steering shaft 10.

Another embodiment of the present disclosure further provides an all-terrain vehicle of a straddle type. The all-terrain vehicle includes a frame and the steering mechanism according to the above embodiment, and the steering mechanism is arranged to the frame.

The above description only involves preferred embodiments of the present disclosure and is not intended to limit the present disclosure, and various modifications and changes may be made to the present disclosure by those skilled in the art. Any modification, equivalent replacement, or improvement made within the principle of the present disclosure shall be included in the protection scope of the present disclosure.

## Claims

1. A steering mechanism of an all-terrain vehicle, comprising:
a steering shaft (10);
a power steering system (20); and
a connecting portion (30) comprising a first shaft sleeve (31), a second shaft sleeve (32), and an elastic membrane assembly (33),
wherein the elastic membrane assembly (33) comprises at least one elastic membrane (331); the first shaft sleeve (31) and the second shaft sleeve (32) are arranged on two sides of the elastic membrane assembly (33) and fastened to the elastic membrane assembly (33); an end of the first shaft sleeve (31) away from the elastic membrane assembly (33) is coupled to the steering shaft (10), and an end of the second shaft sleeve (32) away from the elastic membrane assembly (33) is coupled to the power steering system (20),
wherein the power steering system (20) is splined to the second shaft sleeve (32).
wherein the power steering system (20) comprises a connecting shaft (21) having an external spline (21a), the second shaft sleeve (32) is provided with a shaft hole (32a) having an internal spline (32b), and the internal spline is arranged on an inner wall of the shaft hole (32a); and the second shaft sleeve (32) is fitted over the connecting shaft, and the external spline (21a) is fitted with the internal spline (32b),
wherein the second shaft sleeve (32) comprises a second body (321) having the shaft hole (32a), and a mounting portion (324) arranged on an outer wall of the second body (321);
**characterized in that** the mounting portion (324) comprises a first mounting block (3241) and a second mounting block (3242) arranged oppositely, and a gap in communication with the shaft hole (32a) is formed between the first mounting block (3241) and the second mounting block (3242); and the second body (321) is fitted over the connecting shaft, and the first mounting block (3241) is fastened to the second mounting block (3242).

2. The steering mechanism according to claim 1, wherein the first shaft sleeve (31) comprises a first body (311) and a first connecting plate (312) arranged at an end of the first body (311), and the second shaft sleeve (32) comprises a second body (321) and a second connecting plate (322) arranged at an end of the second body (321); and
the first connecting plate (312) is fastened to the elastic membrane assembly (33), and the second connecting plate (322) is fastened to the elastic membrane assembly (33).

3. The steering mechanism according to claim 1, wherein the first shaft sleeve (31) comprises a first body (311), and the second shaft sleeve (32) comprises a second body (321); and
an end surface of the first body (311) and an end surface of the second body (321) are fastened to the elastic membrane assembly (33).

4. The steering mechanism according to any one of claims 1 to 3,
wherein the elastic membrane assembly (33) comprises two elastic membranes (331), the two elastic membranes (331) are configured as a first elastic membrane (331a) and a second elastic membrane (331b), and the connecting portion (30) further comprises a rigid spacer (34);
the rigid spacer (34) is interposed between and fastened to the first elastic membrane (331a) and the second elastic membrane (331b);
the first shaft sleeve (31) is arranged on a side of the first elastic membrane (331a) away from the rigid spacer (34), and fastened to the first elastic membrane (331a); and
the second shaft sleeve (32) is arranged on a side of the second elastic membrane (331b) away from the rigid spacer (34), and fastened to the second elastic membrane (331b).

5. The steering mechanism according to any one of claims 1 to 3,
wherein the elastic membrane assembly (33) comprises a plurality of stacked elastic membranes (331).

6. The steering mechanism according to any one of claims 1 to 5,
wherein the first shaft sleeve (31) is welded to the steering shaft (10).

7. The steering mechanism according to any one of claims 1 to 6, wherein the steering mechanism further comprises a steering rocker arm (50) and two steering links (60); and
the steering rocker arm (50) has a first end rotatably coupled to the power steering system (20) and a second end rotatably coupled to the two steering links (60).

8. The steering mechanism according to any one of claims 1 to 7,
wherein the power steering system (20) is an electric power steering system (20).

9. The steering mechanism according to any one of claims 1 to 8, further comprising a steering handle assembly (40) coupled to the steering shaft (10).

10. The steering mechanism according to any one of claims 1 to 9, wherein the elastic membrane (331) is a metal sheet.

11. An all-terrain vehicle of a straddle type, comprising a frame and the steering mechanism according to any one of claims 1 to 10, the steering mechanism being arranged to the frame.

## Patentansprüche

1. Lenkmechanismus eines Geländefahrzeugs, umfassend:
eine Lenkwelle (10);
ein Servolenkungssystem (20); und
einen Verbindungsabschnitt (30), umfassend eine erste Wellenhülse (31), eine zweite Wellenhülse (32) und eine elastische Membrananordnung (33),
wobei die elastische Membrananordnung (33) mindestens eine elastische Membran (331) umfasst, die erste Wellenhülse (31) und die zweite Wellenhülse (32) auf zwei Seiten der elastischen Membrananordnung (33) angeordnet und an der elastischen Membrananordnung (33) befestigt sind; ein Ende der ersten Wellenhülse (31) weg von der elastischen Membrananordnung (33) mit der Lenkwelle (10) gekoppelt ist, und ein Ende der zweiten Wellenhülse (32) weg von der elastischen Membrananordnung (33) mit dem Servolenkungssystem (20) gekoppelt ist,
wobei das Servolenkungssystem (20) mit der zweiten Wellenhülse (32) verkeilt ist.
wobei das Servolenkungssystem (20) eine Verbindungswelle (21) umfasst, die ein Keilwellenprofil (21a) aufweist, die zweite Wellenhülse (32) mit einem Wellenloch (32a) versehen ist, die ein Keilnabenprofil (32b) aufweist, und das Keilnabenprofil auf einer Innenwand des Wellenlochs (32a) angeordnet ist; und die zweite Wellenhülse (32) über die Verbindungswelle eingebaut wird und das Keilwellenprofil (21a) mit dem Keilnabenprofil (32b) eingebaut wird,
wobei die zweite Wellenhülse (32) einen zweiten Körper (321) umfasst, der das Wellenloch (32a) und einen Montageabschnitt (324) aufweist, der auf einer Außenwand des zweiten Körpers (321) angeordnet ist;
**dadurch gekennzeichnet, dass** der Montageabschnitt (324) einen ersten Montageblock (3241) und einen zweiten Montageblock (3242) umfasst, die gegenüberliegend angeordnet sind, und ein Spalt in Kommunikation mit dem Wellenloch (32a) zwischen dem ersten Montageblock (3241) und dem zweiten Montageblock (3242) ausgebildet ist; und der zweite Körper (321) über die Verbindungswelle eingebaut wird und der erste Montageblock (3241) an dem zweiten Montageblock (3242) befestigt wird.

2. Lenkmechanismus nach Anspruch 1, wobei die erste Wellenhülse (31) einen ersten Körper (311) und eine erste Verbindungsplatte (312) umfasst, die an einem Ende des ersten Körpers (311) angeordnet ist, und die zweite Wellenhülse (32) einen zweiten Körper (321) und eine zweite Verbindungsplatte (322) umfasst, die an einem Ende des zweiten Körpers (321) angeordnet ist; und
die erste Verbindungsplatte (312) an der elastischen Membrananordnung (33) befestigt ist und die zweite Verbindungsplatte (322) an der elastischen Membrananordnung (33) befestigt ist.

3. Lenkmechanismus nach Anspruch 1, wobei die erste Wellenhülse (31) einen ersten Körper (311) umfasst und die zweite Wellenhülse (32) einen zweiten Körper (321) umfasst; und
eine Endoberfläche des ersten Körpers (311) und eine Endoberfläche des zweiten Körpers (321) an der elastischen Membrananordnung (33) befestigt sind.

4. Lenkmechanismus nach einem der Ansprüche 1 bis 3,
wobei die elastische Membrananordnung (33) zwei elastische Membranen (331) umfasst, die zwei elastischen Membranen (331) als eine erste elastische Membran (331a) und eine zweite elastische Membran (331b) konfiguriert sind, und der Verbindungsabschnitt (30) ferner einen starren Abstandshalter (34) umfasst;
der starre Abstandshalter (34) zwischen der ersten elastischen Membran (331a) und der zweiten elastischen Membran (331b) eingefügt ist und an diesen befestigt ist;
die erste Wellenhülse (31) auf einer Seite der ersten elastischen Membran (331a) weg von dem Abstandshalter (34) angeordnet und an der ersten elastischen Membran (331a) befestigt ist; und
die zweite Wellenhülse (32) auf einer Seite der zweiten elastischen Membran (331b) weg von dem starren Abstandshalter (34) angeordnet und an der zweiten elastischen Membran (331b) befestigt ist.

5. Lenkmechanismus nach einem der Ansprüche 1 bis 3,
wobei die elastische Membrananordnung (33) eine Vielzahl von gestapelten elastischen Membranen (331) umfasst.

6. Lenkmechanismus nach einem der Ansprüche 1 bis 5, wobei die erste Wellenhülse (31) mit der Lenkwelle (10) verschweißt ist.

7. Lenkmechanismus nach einem der Ansprüche 1 bis 6,
wobei der Lenkmechanismus ferner einen Lenkschwinghebel (50) und zwei Lenkgestänge (60) umfasst; und
der Lenkschwinghebel (50) ein erstes Ende, das mit dem Servolenkungssystem (20) drehbar verbunden ist, und ein zweites Ende aufweist, das mit den zwei Lenkstangen (60) drehbar verbunden ist.

8. Lenkmechanismus nach einem der Ansprüche 1 bis 7,
wobei das Servolenkungssystem (20) ein elektrisches Servolenkungssystem (20) ist.

9. Lenkmechanismus nach einem der Ansprüche 1 bis 8,
ferner umfassend eine Lenkgriffanordnung (40), die mit der Lenkwelle (10) gekoppelt ist.

10. Lenkmechanismus nach einem der Ansprüche 1 bis 9,
wobei die elastische Membran (331) ein Metallblech ist.

11. Geländefahrzeug eines Grätschsitztyps, umfassend einen Rahmen und den Lenkmechanismus nach einem der Ansprüche 1 bis 10, wobei der Lenkmechanismus an dem Rahmen angeordnet ist.

## Revendications

1. Mécanisme de direction d'un véhicule tout-terrain, comprenant :
un arbre de direction (10) ;
une direction assistée (20) ; et
une partie de liaison (30) comprenant une première chemise d'arbre (31), une seconde chemise d'arbre (32) et un ensemble membrane élastique (33),
dans lequel l'ensemble de membrane élastique (33) comprend au moins une membrane élastique (331) ; la première chemise d'arbre (31) et la seconde chemise d'arbre (32) sont disposées sur les deux côtés de l'ensemble membrane élastique (33) et fixées à l'ensemble de membrane élastique (33) ; une extrémité de la première chemise d'arbre (31) éloignée de l'ensemble membrane élastique (33) est accouplée à l'arbre de direction (10), et une extrémité de la seconde chemise d'arbre (32) éloignée de l'ensemble membrane élastique (33) est accouplée à la direction assistée (20),
dans lequel la direction assistée (20) est cannelée à la seconde chemise d'arbre (32).
dans lequel la direction assistée (20) comprend un arbre de liaison (21) ayant une cannelure externe (21a), la seconde chemise d'arbre (32) est pourvue d'un trou d'arbre (32a) ayant une cannelure interne (32b), et la cannelure interne est disposée sur une paroi intérieure du trou d'arbre (32a) ; et la seconde chemise d'arbre (32) est installée sur l'arbre de liaison, et la cannelure externe (21a) est installée sur la cannelure interne (32b),
dans lequel la seconde chemise d'arbre (32) comprend un second corps (321) ayant le trou d'arbre (32a), et une partie de montage (324) disposée sur une paroi extérieure du second corps (321) ;
**caractérisé en ce que** la partie de montage (324) comprend un premier bloc de montage (3241) et un second bloc de montage (3242) disposés de manière opposée, et qu'un espace en communication avec le trou de l'arbre (32a) est formé entre le premier bloc de montage (3241) et le second bloc de montage (3242) ; et le second corps (321) est installé sur l'arbre de liaison, et le premier bloc de montage (3241) est fixé au second bloc de montage (3242).

2. Mécanisme de direction selon la revendication 1, dans lequel la première chemise d'arbre (31) comprend un premier corps (311) et une première plaque de liaison (312) disposée à une extrémité du premier corps (311), et la seconde chemise d'arbre (32) comprend un second corps (321) et une seconde plaque de liaison (322) disposée à une extrémité du second corps (321) ; et
la première plaque de liaison (312) est fixée à l'ensemble membrane élastique (33), et la seconde plaque de liaison (322) est fixée à l'ensemble membrane élastique (33).

3. Mécanisme de direction selon la revendication 1, dans lequel la première chemise d'arbre (31) comprend un premier corps (311), et la seconde chemise d'arbre (32) comprend un second corps (321) ; et
une surface d'extrémité du premier corps (311) et une surface d'extrémité du second corps (321) sont fixées à l'ensemble membrane élastique (33).

4. Mécanisme de direction selon l'une quelconque des revendications 1 à 3,
dans lequel l'ensemble membrane élastique (33) comprend deux membranes élastiques (331), les deux membranes élastiques (331) étant conçues comme une première membrane élastique (331a) et une seconde membrane élastique (331b), et la partie de liaison (30) comprend en outre une entretoise rigide (34) ;
l'entretoise rigide (34) est interposée et fixée entre la première membrane élastique (331a) et la seconde membrane élastique (331b) ;
la première chemise d'arbre (31) est disposée sur un côté de la première membrane élastique (331a) éloignée de l'entretoise rigide (34) et fixée à la première membrane élastique (331a) ; et
la seconde chemise d'arbre (32) est disposée sur un côté de la seconde membrane élastique (331b) éloignée de l'entretoise rigide (34), et fixée à la seconde membrane élastique (331b).

5. Mécanisme de direction selon l'une quelconque des revendications 1 à 3,
dans lequel l'ensemble membrane élastique (33) comprend plusieurs membranes élastiques empilées (331).

6. Mécanisme de direction selon l'une quelconque des revendications 1 à 5, dans lequel la première chemise d'arbre (31) est soudée à l'arbre de direction (10).

7. Mécanisme de direction selon l'une quelconque des revendications 1 à 6,
dans lequel le mécanisme de direction comprend en outre un culbuteur de direction (50) et deux barres de direction (60) ; et
le culbuteur de direction (50) a une première extrémité accouplée de manière rotative à la direction assistée (20) et une seconde extrémité accouplée de manière rotative aux deux barres de direction (60).

8. Mécanisme de direction selon l'une quelconque des revendications 1 à 7,
dans lequel le système de direction assistée (20) est un système de direction assistée (20) électrique.

9. Mécanisme de direction selon l'une quelconque des revendications 1 à 8,
comprenant en outre un ensemble poignée de direction (40) accouplé à l'arbre de direction (10).

10. Mécanisme de direction selon l'une quelconque des revendications 1 à 9,
dans lequel la membrane élastique (331) est une feuille de métal.

11. Véhicule tout-terrain de type à enfourcher, comprenant un cadre et le mécanisme de direction selon l'une quelconque des revendications 1 à 10, le mécanisme de direction étant fixé au cadre.
